# EUROPÄISCHE PATENTSCHRIFT

(11) **EP 0 480 234 B1**
(45) Veröffentlichungstag und Bekanntmachung des Hinweises auf die Patenterteilung: **26.02.1997**
(21) Anmeldenummer: 91116207.1
(22) Anmeldetag: 24.09.1991
(51) Int. Cl.: B23K 26/14

(54) **Laserdüse**
Laser nozzle
Buse pour laser

(30) Priorität: 06.10.1990 DE 9013943 U
(43) Veröffentlichungstag der Anmeldung: 15.04.1992
(73) Patentinhaber: Trumpf GmbH & Co, D-71254 Ditzingen (DE)
(72) Erfinder: Neidhardt, Gerhard, W-7257 Ditzingen (DE)
(74) Vertreter: Schmid, Berthold, Dipl.-Ing.

(56) Entgegenhaltungen:
- DE-A- 3 637 568
- US-A- 3 821 510
- PATENT ABSTRACTS OF JAPAN vol. 7, no. 283 (M-263)(1428) 16. Dezember 1983

## Beschreibung

Die Erfindung bezieht sich auf einen Laserkopf mit Laserdüse, welche eine axiale Längsbohrung für einen Laserstrahl sowie für Schneidgas aufweist, die sich in Durchströmrichtung wenigstens an einer Stelle, vorzugsweise konisch, verengt, wobei in diese Verengungsstelle, insbesondere Konusfläche, das innere Ende zumindest eines nach außen gegen ein Werkstück gerichteten Hilfskanals mündet.

Die Erfindung betrifft weiterhin einen Laserkopf mit Laserdüse, welche eine axiale Längsbohrung für einen Laserstrahl sowie für Schneidgas aufweist, die sich in Durchströmrichtung wenigstens an einer Stelle unter Bildung einer ebenen anströmbaren Querfläche verengt, wobei an der anströmbaren Querfläche der Laserdüse innere Enden mehrerer nach außen gegen ein Werkstück gerichteter Hilfskanäle münden.

Laserdüsen der beschriebenen Art sind in den verschiedensten Ausführungen bereits bekannt. Sie werden in axialer Richtung sowohl vom Laserstrahl als auch vom Schneidgas durchströmt, wobei letzteres an geeigneter Stelle in den den Laserstrahl aufnehmenden Kanal des Laserkopfes eingespeist wird. Demnach treten über die Düsenmündung der Laserstrahl und das Schneidgas aus, und sie treffen am üblicherweise darunter befindlichen Werkstück auf. Eine Relativverschiebung von Laserdüse und Werkstück führt zum Erzeugen einer Brennspur am Werkstück. Das Schneidgas verbessert den Verbrennungsvorgang und "säubert" gleichzeitig die Brennspur im Bereich der momentanen Brennstelle.

Weil sich der Laserstrahl hinter einer Fokussiereinrichtung, beispielsweise einer Linse, verengt, muß der Hohlraum in Laserkopf und Laserdüse entsprechend gestaltet sein, d.h. im Bereich der Fokussiereinrichtung, also im Laserkopf, ist ein gewisser Mindestdurchmesser des Laserkopfkanals erforderlich. Der Kanalquerschnitt nimmt im Laserkopf und/oder in der Düse gegen die Düsenmündung hin ab. Dies führt dazu, daß sich die Längsbohrung der Düse absatzartig und/oder stetig wenigstens einmal, oft mehrfach, verengt.

Im Bereich der Düsenmündung ist ein relativ enger Querschnitt vorhanden.

Aus der gattungsbildenden JP-A-58-157 587 ist ein Laserkopf bekannt, an dessen Düse konzentrisch zur Düsenachse und somit den Laserstrahl auf einer Kreisbahn umgebend Hilfskanäle angeordnet sind. Ungeachtet der jeweiligen Bearbeitungsrichtung wird stets durch sämtliche Hilfskanäle Schneidgas auf das zu bearbeitende Werkstuck aufgegeben. Ein Großteil des Schneidgases gelangt dabei nicht in die zweckmäßigerweise zu beaufschlagende Brennspur.

Der Erfindung liegt nun die Aufgabe zugrunde, einen Laserkopf zu schaffen, mittels dessen eine wirkungsvolle Beaufschlagung der Brennspur mit Schneidgas auch bei wechselnder Richtung der Relativbewegung von Laserkopf und zu bearbeitendem Werkstück möglich ist.

Zur Lösung dieser Aufgabe sind erfindungsgemäß an Vorrichtungen der eingangs erstgenannten Art die kennzeichnenden Merkmale von Patentanspruch 1 vorgesehen. Wenn das aus dem oder den Hilfskanälen ausströmende Gas vor allen Dingen dazu vorgesehen ist, in den erzeugten Schlitz eingeblasen zu werden, so erreicht man eine wesentliche Gaseinsparung, wenn man keinen Kranz von Hilfskanälen vorsieht, sondern nur einen oder wenige nebeneinanderliegende. Das Einblasen des Gasstroms in den erzeugten Teil des gebrannten Schlitzes ist dann am wirkungsvollsten, wenn man den Hilfskanal oder die Gruppe von Hilfskanälen so anordnet, daß sie in Erzeugungsrichtung des Schlitzes dem Laserstrahl nacheilen. Weil jedoch der erzeugte Schlitz in aller Regel nicht nur geradlinig verläuft, sondern eine beliebige Form haben kann, erreicht man das angestrebte Ziel nur dann, wenn man entweder die Laserdüse relativ zum Laserkopf um die Längsachse des letzteren drehbar lagert oder aber den Laserkopf mit der relativ unverdrehbaren Düse gegenüber einem weiteren Bauteil der Laserschneidmaschine um die geometrische Achse der Längsbohrung drehbar ausbildet. Bei modernen Laserschneidmaschinen mit beispielsweise feststehender Laserdüse und einer Relativverschiebung des Werkstücks, insbesondere eines Blechs, gegenüber der Laserdüse mit Hilfe eines X-Y-Vorschubs erreicht man das Verschieben in X- und/oder Y-Richtung über eine Programmsteuerung der Laserschneidmaschine. Es ist nun für einen Steuerungsfachmann ohne weiteres möglich, diese Programmsteuerung so auszulegen, daß mit der Verschiebebewegung des Werkstücks zugleich auch eine entsprechende Drehung der Laserdüse oder des Laserkopfs mit der Laserdüse vorgenommen wird, so daß der oder die Hilfskanäle grundsätzlich dem Laserstrahl nacheilen.

Eine besonders bevorzugte Ausführungsform der Erfindung kennzeichnet sich dadurch, daß die Laserdüse in Durchströmrichtung mehrere hintereinanderliegende Verengungsstellen aufweist und der oder die Hilfskanäle innen an der in Durchströmrichtung zweiten Verengungsstelle münden. Dadurch erfolgt im Bereich der Düse eine frühzeitige Ableitung des oder der Gasströme zu dem oder den Hilfskanälen hin.

Die obengenannte Aufgabe wird außerdem dadurch gelöst, daß an einer Vorrichtung der eingangs zweitgenannten Art die kennzeichnenden Merkmale von Patentanspruch 4 vorgesehen sind, wonach auf der Querfläche der Laserdüse ein ringförmiger Steuerschieber aufliegt, der in zwei zueinander senkrechten Richtungen gesteuert verschiebbar ist, wobei in jeder Verschiebestellung nur eines oder wenige der inneren Enden der nach außen gerichteten Hilfskanäle mit der Längsbohrung strömungsverbunden ist bzw. sind.

An beiden grundlegenden Ausführungsformen der Erfindung kann das Schneidgas sowohl über die Längsbohrung als auch den Hilfskanal oder mehrere davon, abströmen. Selbstverständlich sind die Hilfskanäle so angeordnet und ist ihre Durchströmrichtung so gewählt, daß das über sie ausströmende Schneidgas mehr oder weniger nahe an der momentanen Brennstelle auf das Werkstück auftrifft. Es hat sich gezeigt, daß durch den gezielten Einsatz des Schneidgases, d.h. durch die günstigere Schneidgasabströmung die Schnittkanten vor allen Dingen bei hohen Vorschubgeschwindigkeiten verbessert werden, was besonders dann der Fall ist, wenn aus dem oder wenigstens einem der Hilfskanäle das Schneidgas mehr oder weniger unmittelbar in die Schneidspur bzw. den erzeugten Schlitz geblasen wird. Andererseits führt dies zu keiner konstruktiv komplizierten Laserdüsenausbildung, vielmehr reicht es aus, wenn man den oder die Hilfskanäle so anbringt, daß sie innen in den Düsenraum münden und aufgrund der Lage der äußeren Mündung das Gas an der vorbestimmten Stelle des Werkstücks auftrifft.

Bei der im Anspruch 4 erwähnten Querfläche kann es sich um eine senkrecht zur Düsenlängsachse verlaufende Fläche handeln, die sowohl eine innere Absatzfläche als auch die von der Mündung abgewandte Endfläche sein kann.

Eine Weiterbildung der Erfindung sieht vor, daß die gesamte innere Mündung jedes Hilfskanals der Verengungsstelle bzw. der ausgewählten Verengungsstelle, insbesonder Konusfläche oder die gesamten inneren Mündungen der Hilfskanäle der anströmbaren Querfläche der Laserdüse zugeordnet ist bzw. sind und jeder Hilfskanal geradlinig verläuft. Letzteres ermöglicht, die Hilfskanäle als Bohrungen auszubilden. Durch einen Verzicht auf das Anschneiden einer zylindrischen Wandung, das man dadurch erreicht, daß die gesamte innere Mündung oder die gesamten inneren Mündungen der Verengungsstelle bzw. ausgewählten Verengungsstelle oder der anströmbaren Querfläche der Laserdüse zugeordnet ist bzw. sind, erreicht man strömungstechnisch günstige Bedingungen.

Eine weitere Ausgestaltung der Erfindung besteht darin, daß jeder Hilfskanal geneigt zur Düsenachse verläuft, wobei sich die geometrischen Achsen der Längsbohrung und jedes Hilfskanals außerhalb der Laserdüse etwa schneiden. Weil die Schneidgase mit sehr hoher Geschwindigkeit austreten können und der Abstand der Düse vom Werkstück relativ gering ist, spielt es keine wesentliche Rolle, ob sich die geometrischen Achsen tatsächlich oder nur annähernd schneiden. Außerdem ist die Brennstelle bei einem mehrere Millimeter dicken Blech od.dgl. gar nicht exakt zu definieren, da sie durch die ganze Blechdicke hindurch verläuft. Infolgedessen ist es beim Schneiden der geometrischen Achse nicht von entscheidender Bedeutung, ob die theoretische Schnittstelle der geometrischen Achsen auf der Werkstückoberfläche oder etwas weiter innen im Werkstück oder gar unterhalb desselben liegt. Selbstverständlich muß sie aber im Bereich der momentanen Brennstelle gelegen sein.

Die geometrischen Achsen aller Hilfskanäle liegen vorteilhafterweise auf einem gedachten Kegelstumpf. Die Spitze desselben weist nach außen bzw. in üblicher Gebrauchsstellung nach unten gegen das Werkstück hin. Sie liegt auf der geometrischen Achse der Längsbohrung.

Eine weitere Ausbildung der Erfindung ist dadurch gekennzeichnet, daß sich an die äußere Mündung der zentrischen Längsbohrung eine trichterartige Erweiterung anschließt, in welcher die äußere Mündung jedes Hilfskanals liegt. Die einzelnen Teilströme aus den Hilfskanälen können dadurch in gewisser Weise zusammengeführt werden und den Laserstrahl zwischen Düse und Werkstück umgeben.

Eine andere Variante der Erfindung sieht vor, daß die Laserdüse und der Laserkopf über Gewinde miteinander verbunden sind, wobei insbesondere an der Düse ein Gewindezapfen angebracht ist und der Laserkopf an seinem düsenseitigen Ende ein Muttergewinde aufweist. Soweit erforderlich, kann an dieser Stelle noch eine Abdichtung bekannter Art vorgesehen werden.

Die Erfindung wird nachstehend anhand von Zeichnungen näher erläutert. Es zeigen:
- Fig. 1: schematisiert einen Halbschnitt durch die Laserdüse bei einem Schnitt durch das düsenseitige Ende des Laserkopfs,
- Fig. 2: eine ähnliche Darstellung einer zweiten Ausführungsform,
- Fig. 3: einen Schnitt gemäß der Linie III-III der Fig. 2.

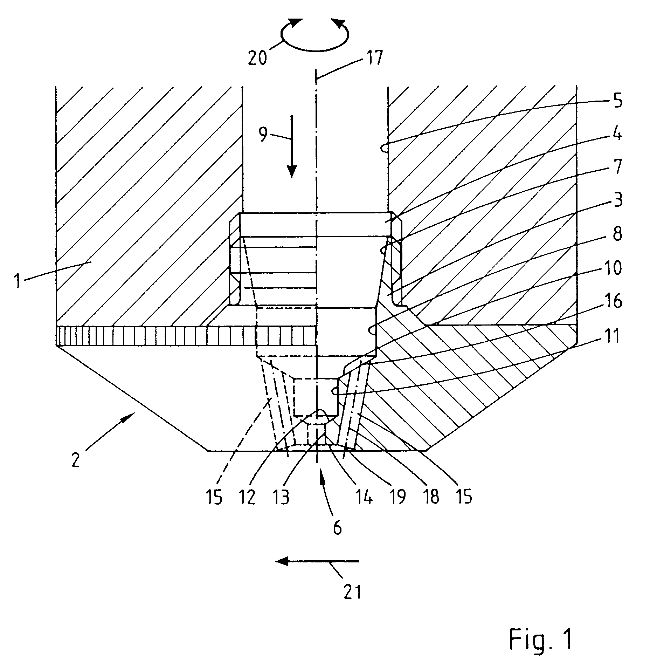

Der Laserkopf 1 trägt an seinem in der Zeichnung unteren Ende eine Laserdüse 2 die in Fig. 1 mit einem Gewindezapfen 3 ausgestattet ist. Dessen Außengewinde ist in das Muttergewinde 4 am düsenseitigen Ende des Laserkopfs 1 eingeschraubt. Soweit erforderlich, kann an geeigneter Stelle eine Dichtung vorgesehen sein. Die Einheit aus Laserkopf und Laserdüse ist mit einer zentrischen Längsbohrung 5 versehen, über welche der Laserstrahl nach Durchlaufen einer nicht gezeigten, beispielsweise aus einer Linse bestehenden Fokussiereinrichtung der Düsenmündung 6, zugeführt wird. Außerdem strömt über diese zentrische Längsbohrung auch noch ein Schneidgas, welches an geeigneter Stelle in den Laserkopf eingespeist wird. Somit treten über die Laserdüse 2 sowohl der Schneidstrahl als auch dieses Schneidgas aus. Im Bereich des Laserkopfes benötigt man einen wesentlich größeren Querschnitt der zentrischen Längsbohrung als im Endbereich der Düse. Infolgedessen muß diese Längsbohrung im Querschnitt reduziert werden. Diese Querschnittsverengung kann im Laserkopf und/oder in der Laserdüse vorgenommen werden. Beim Ausführungsbeispiel ist die zentrische Längsbohrung in dem gezeichneten Teil des Laserkopfes von konstantem Querschnitt. Im Bereich des Gewindezapfens 3 der Laserdüse 2 findet aufgrund eines ersten konischen Bohrungsteils 7 eine erste Querschnittsverminderung statt. An diesen Bohrungsteil schließt sich ein zylindrischer Bohrungsteil 8 an. In Strömungsrichtung 9 gesehen, folgt ein zweiter konischer Bohrungsteil 10, der eine stärkere Querschnittsverminderung bewirkt. Nach einem sich anschließenden zweiten zylindrischen Bohrungsteil 11 folgen in Strömungsrichtung ein dritter konischer Bohrungsteil 12 und ein dritter zylindrischer Bohrungsteil 13. Bei einer bevorzugten Ausführungsform der Laserdüse befindet sich die Mündung des dritten zylindrischen Bohrungsteils in einer trichterartigen Erweiterung 14.

In die trichterartige Erweiterung 14 mündet das äußere Ende wenigstens eines Hilfskanals 15. Sein inneres Ende ist beim Ausführungsbeispiel der Fig. 1 der zweiten Verengungsstelle der zentrischen Längsbohrung 5, nämlich dem zweiten konischen Bohrungsteil 10 zugeordnet. Dies ermöglicht nicht nur die Verwendung geradliniger Hilfskanäle, sondern auch deren Anbringung mit Hilfe eines Bohrers. Bei beiden Ausführungsbeispielen sind mehrere solcher Hilfskanäle in insbesondere gleichmäßigem Umfangsabstand angeordnet.

Aus dem Vorstehenden ergibt sich, daß das in die Düse einströmende Schneidgas bei dieser Ausbildung nicht nur über die zentrische Düsenmündung 6, sondern auch über den oder die Hilfskanäle ausströmt. Desweiteren ersieht man aus Fig. 1 der Zeichnung, daß die gesamte innere Mündung 16 jedes Hilfskanals der Verengungsstelle bzw. bei mehreren der ausgewählten Verengungsstelle zugeordnet ist. Beim Ausführungsbeispiel der Fig. 1 ist dies, wie gesagt, die Verengungsstelle, welche durch den zweiten konischen Bohrungsteil 10 der Laserdüse 2 gebildet ist. Hieraus ist leicht zu erkennen, daß man den Hilfskanal, wenn man ihn bezüglich der geometrischen Achse 17 der zentrischen Längsbohrung 5 radial nach außen verlegt, auch im ersten konischen Bohrungsteil 7 hätte münden lassen können. In diesem Falle wäre der Verlauf aber eher etwa parallel zur geometrischen Achse 17. Schließlich wird der Ordnung halber auch noch angemerkt, daß man in jede Verengungsstelle innen einen oder mehrere Hilfskanäle münden lassen kann, also auch den dritten konischen Bohrungsteil 12, und zwar nicht nur wahlweise.

Bei beiden Ausführungsbeispielen verläuft jeder Hilfskanal 15 geneigt zur Düsenachse bzw. zur geometrischen Achse 17. Demnach schneiden sich die geometrischen Achsen 17 der Längsbohrung 5 und 18 jedes Hilfskanals 15 außerhalb der Düse, also in der Zeichnung unterhalb der Düse. Dabei liegen dann alle geometrischen Achsen 18 der Hilfskanäle 15 auf einem gedachten Kegelstumpf im Düseninneren. Selbstverständlich weist die theoretische Spitze des Kegelstumpfs nach unten. Wie bereits ausgeführt, liegt die äußere Mündung 19 jedes Hilfskanals 15 in der trichterartigen Erweiterung 14, welche sich an den dritten zylindrischen Bohrungsteil der Laserdüse 2 anschließt.

In nicht gezeigter Weise kann man die Laserdüse 2 der Fig. 1 im Sinne des Doppelpfeils 20 um 360 Grad drehbar um die geometrische Achse 17 am Laserkopf 1 lagern. Damit dies nicht mit einer axialen Verschiebung einhergeht, wird in diesem Falle auf eine Gewindeverbindung zwischen Laserkopf und Laserdüse verzichtet. Statt dessen kann man aber auch den Laserkopf 1 mit einem Drehantrieb ausstatten, damit dieser zusammen mit der undrehbar an ihm gehaltenen Laserdüse 2 um den Winkel von 360 Grad gegenüber der Laser-Schneidmaschine gedreht werden kann. Dies ist beispielsweise dadurch möglich, daß man außen am Laserkopf 1 einen Zahnkranz anbringt oder anformt, mit dessen Zähne diejenigen eines Antriebsritzels kämmen, das von einem steuerbaren Motor angetrieben wird. Die Steuerung dieses Motors kann durch die Programmsteuerung der Laser-Schneidmaschine gebildet werden bzw. diese ergänzen.

Bei dieser Variante der Erfindung ist lediglich ein Hilfskanal 15 vorgesehen. Denkbar sind aber auch mehrere, in Umfangsrichtung nebeneinander angebrachte Hilfskanäle 15, wobei sich diese aber nur über einen Teilumfang der Düse erstrecken. Über diese Drehung ist es dann möglich, daß der oder die aus dem oder den Hilfskanälen austretenden zusätzlichen Gasströme dem Laserstrahl in Erzeugungsrichtung 21 der Laser-Brennspur am nicht dargestellten Werkstück nacheilen. Man kann dadurch Gas sparen oder anders ausgedrückt, bei einer bestimmten Gasmenge pro Zeiteinheit einen höheren Gasstrom über den einzigen oder die wenigen Hilfskanäle 15 austreten lassen.

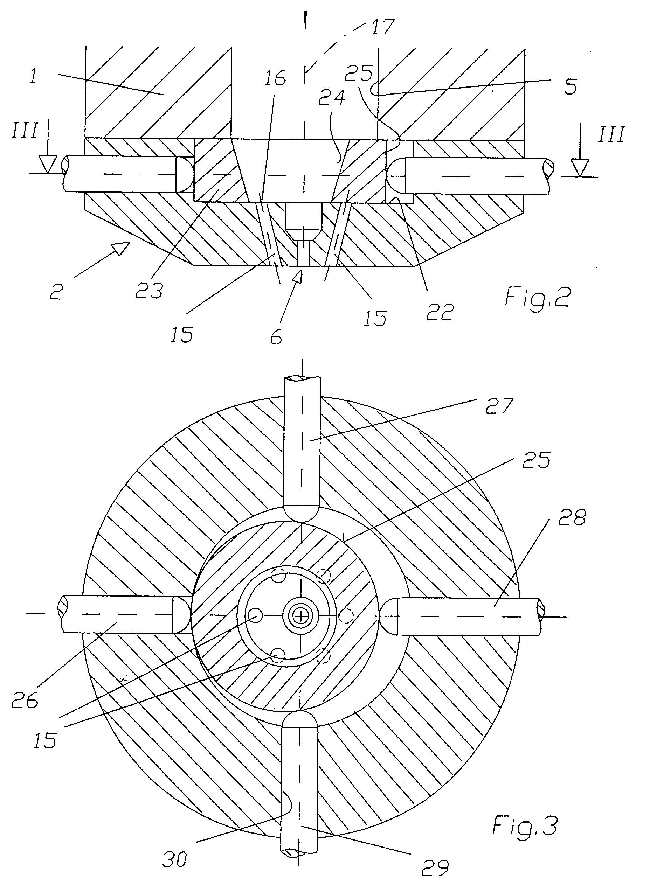

Bei der zweiten, in den Fign. 2 und 3 dargestellten Ausführungsform der Erfindung befinden sich die inneren Enden 16 der Hilfskanäle 15 an einer ebenen anströmbaren Querfläche 22 der Düse. Diese sind konzentrisch zur geometrischen Düsenachse 17 angeordnet. Außerdem verlaufen sie in gleicher oder ähnlicher Weise geneigt wie die Hilfskanäle 15 der Fig. 1. In nicht dargestellter Weise kann eine trichterartige Erweiterung am äußeren bzw. unteren Ende der Hilfskanäle vorgesehen sein, welche der trichterartigen Erweiterung 14 der Fig. 1 entspricht.

Auf der ebenen anströmbaren Querfläche 22 der Düse liegt ein ringförmiger Steuerschieber 23 auf, der mit einer sich in Durchströmrichtung konisch verengenden zentrischen Bohrung 24 ausgestattet ist. Außen ist dieser Steuerschieber durch einen kreiszylindrischen Mantel 25 begrenzt. An diesem liegen die inneren Enden vierer Steuerbolzen 26 bis 29 an. Die Steuerbolzen 26 und 28 verlaufen beispielsweise in X-Richtung, während sich die Steuerbolzen 27 und 29 dann in Y-Richtung erstrecken. Es ist ohne weiteres einzusehen, daß man durch gleichzeitige Betätigung der Steuerbolzen den Steuerschieber 23 beliebig innerhalb der X-Y-Ebene verschieben kann. Die Betätigung der Steuerbolzen erfolgt über nicht gezeigte Verstellmotoren, die von der Steuerung der Laser-Schneidmaschine in vorbestimmter Weise ansteuerbar sind. Gemäß Fig. 2 ist die zentrische Bohrung 24 so verengt, daß das über die zentrische Längsbohrung 5 ankommende Schneidgas immer nur über einen oder wenige der Hilfskanäle 15 abströmen kann. Die Ansteuerung des Schiebers 23 wird nun so vorgenommen, daß das Schneidgas immer nur über die Hilfskanäle abströmen kann, die in Vorschubrichtung des Werkstücks dem Laserstrahl nacheilen, so daß das austretende Lasergas grundsätzlich in den bis dahin erzeugten Schlitz eingeblasen wird. Sobald der Schlitz eine andere Richtung nimmt, wird der Schieber entsprechend verschoben.

Selbstverständlich sind die Steuerbolzen 26 bis 29 gegen ihre jeweilige Bohrung 30 in bekannter Weise abgedichtet, so daß das unter Druck stehende Schneidgas dort nicht abströmen kann. Außerdem wird die Düse in nicht näher gezeigter Weise am unteren Ende des Laserkopfs 1 befestigt, beispielsweise angeschraubt.

## Patentansprüche

1. Laserkopf mit Laserdüse, welche eine axiale Längsbohrung für einen Laserstrahl sowie für Schneidgas aufweist, die sich in Durchströmrichtung wenigstens an einer Stelle, vorzugsweise konisch, verengt, wobei in diese Verengungsstelle, insbesondere Konusfläche, das innere Ende zumindest eines nach außen gegen ein Werkstück gerichteten Hilfskanals mündet, dadurch gekennzeichnet, daß der Laserkopf (1) oder die Laserdüse (2) am Laserkopf (1) drehbar gelagert und mittels eines steuerbaren Motors antreibbar ist und daß die Laserdüse (2) nur einen Hilfskanal (15) oder nur auf einem Teilumfang Hilfskanäle (15) aufweist.

2. Laserkopf mit Laserdüse nach Anspruch 1, dadurch gekennzeichnet, daß der steuerbare Motor für die Drehung der Laserdüse (2) im Laserkopf (1) oder des Laserkopfes (1) an einer Laser-Schneidmaschine mit der Programmsteuerung der letzteren verbunden ist.

3. Laserkopf mit Laserdüse nach einem der vorhergehenden Ansprüche, dadurch gekennzeichnet, daß die Laserdüse (2) in Durchströmrichtung (9) mehrere hintereinanderliegende Verengungsstellen (7, 10, 12) aufweist und der oder die Hilfskanäle (15) innen an der in Durchströmrichtung (9) zweiten Verengungsstelle (10) münden.

4. Laserkopf mit Laserdüse, welche eine axiale Längsbohrung für einen Laserstrahl sowie für Schneidgas aufweist, die sich in Durchströmrichtung wenigstens an einer Stelle unter Bildung einer ebenen anströmbaren Querfläche verengt, wobei an der anströmbaren Querfläche der Laserdüse innere Enden mehrerer nach außen gegen ein Werkstück gerichteter Hilfskanäle münden, dadurch gekennzeichnet, daß auf der Querfläche (22) ein ringförmiger Steuerschieber (23) aufliegt, der in zwei zueinander senkrechten Richtungen gesteuert verschiebbar ist, wobei in jeder Verschiebestellung nur eines oder wenige der inneren Enden (16) mit der Längsbohrung (5) strömungsverbunden ist bzw. sind.

5. Laserkopf mit Laserdüse nach wenigstens einem der vorhergehenden Ansprüche, dadurch gekennzeichnet, daß die gesamte innere Mündung des Hilfskanals (15) der Verengungsstelle bzw. der ausgewählten Verengungsstelle (10), insbesondere Konusfläche, oder die gesamten inneren Mündungen der Hilfskanäle (15) der anströmbaren Querfläche (22) der Laserdüse (2) zugeordnet ist bzw. sind und jeder Hilfskanal (15) geradlinig verläuft.

6. Laserkopf mit Laserdüse nach wenigstens einem der vorhergehenden Ansprüche, dadurch gekennzeichnet, daß jeder Hilfskanal (15) geneigt zur Düsenachse (17) verläuft, wobei sich die geometrischen Achsen (17, 18) der Längsbohrung (5) und jedes Hilfskanals (15) außerhalb der Laserdüse (2) etwa schneiden.

7. Laserkopf mit Laserdüse nach Anspruch 5, dadurch gekennzeichnet, daß die geometrischen Achsen (18) aller Hilfskanäle (15) auf einem gedachten Kegelstumpf im Düseninneren liegen.

8. Laserkopf mit Laserdüse nach wenigstens einem der vorhergehenden Ansprüche, dadurch gekennzeichnet, daß sich an die äußere Mündung (6) der zentrischen Längsbohrung (5) eine trichterartige Erweiterung (14) anschließt, in welcher die äußere Mündung (19) jedes Hilfskanals (15) liegt.

9. Laserkopf mit Laserdüse nach wenigstens einem der vorhergehenden Ansprüche, dadurch gekennzeichnet, daß die Laserdüse (2) und der Laserkopf (1) über Gewinde (4) miteinander verbunden sind.

## Claims

1. Laser head having a laser nozzle which has an axial longitudinal bore for a laser beam and also for cutting gas, which bore narrows in the direction of flow, preferably conically, at at least one location, the inner end of at least one auxiliary duct, which is directed outwards towards a workpiece, opening out in this narrowed location, especially cone face, characterised in that the laser head (1) or the laser nozzle (2) on the laser head (1) is mounted to be rotatable and can be driven by a controllable motor, and in that the laser nozzle (2) has only one auxiliary duct (15) or has auxiliary ducts (15) on only one portion of the circumference.

2. Laser head having a laser nozzle according to Claim 1, characterised in that the controllable motor, for the rotation of the laser nozzle (2) in the laser head (1) or for the rotation of the laser head (1) on a laser cutting machine, is connected to the programme control system of the said laser cutting machine.

3. Laser head having a laser nozzle according to either of the preceding claims, characterised in that the laser nozzle (2) has several narrowed locations (7, 10, 12) arranged one behind the other in the direction of flow (9) and the auxiliary duct(s) (15) open(s) out at the inside at the narrowed location (10) that is second in the direction of flow (9).

4. Laser head having a laser nozzle which has an axial longitudinal bore for a laser beam and also for cutting gas, which bore narrows in the direction of flow at at least one location with the formation of a flat transverse face against which the flow can be directed, inner ends of several auxiliary ducts, which are directed outwards towards a workpiece, opening out at the transverse face of the laser nozzle, against which face the flow can be directed, characterised in that an annular control slide (23) rests on the transverse face (22) and can be displaced in a controlled manner in two directions perpendicular to one another, only one or a few of the inner ends (16) being connected in terms of flow to the longitudinal bore (5) in each displacement position.

5. Laser head having a laser nozzle according to at least one of the preceding claims, characterised in that the entire inner mouth of the auxiliary duct (15) is associated with the narrowed location or the selected narrowed location (10), especially cone face, or all of the inner mouths of the auxiliary ducts (15) are associated with the transverse face (22) of the laser nozzle (2), against which face the flow can be directed, and each auxiliary duct (15) extends in a rectilinear manner.

6. Laser head having a laser nozzle according to at least one of the preceding claims, characterised in that each auxiliary duct (15) is inclined relative to the nozzle axis (17), the geometric axes (17, 18) of the longitudinal bore (5) and of each auxiliary duct (15) intersecting approximately outside the laser nozzle (2).

7. Laser head having a laser nozzle according to Claim 5, characterised in that the geometric axes (18) of all the auxiliary ducts (15) lie on an imaginary truncated cone inside the nozzle.

8. Laser head having a laser nozzle according to at least one of the preceding claims, characterised in that a funnel-like widened portion (14), in which the outer mouth (19) of each auxiliary duct (15) lies, adjoins the outer mouth (6) of the centric longitudinal bore (5).

9. Laser head having a laser nozzle according to at least one of the preceding claims, characterised in that the laser nozzle (2) and the laser head (1) are connected to one another by means of a thread (4).

## Revendications

1. Tête de laser munie d'une buse de laser présentant un alésage longitudinal axial qui est destiné à un rayon laser, ainsi qu'à du gaz de découpage, et qui se rétrécit de préférence coniquement dans la direction de l'écoulement, dans au moins une zone, l'extrémité intérieure d'au moins un canal auxiliaire, orienté vers l'extérieur en direction d'une pièce à usiner, débouchant dans cette zone de rétrécissement représentant, notamment, une surface conique, caractérisée par le fait que la tête de laser (1), ou la buse de laser (2) installée sur la tête de laser (1), est montée à rotation et peut être entraînée au moyen d'un moteur commandable ; et par le fait que la buse de laser (2) présente seulement un canal auxiliaire (15), ou bien des canaux auxiliaires (15) uniquement sur une partie du pour-tour.

2. Tête de laser munie d'une buse de laser, selon la revendication 1, caractérisée par le fait que le moteur commandable, conçu pour faire tourner la buse de laser (2) dans la tête de laser (1), ou la tête de laser (1) sur une machine de découpage au laser, est relié à la commande programmée de cette dernière.

3. Tête de laser munie d'une buse de laser, selon l'une des revendications précédentes, caractérisée par le fait que la buse de laser (2) comprend plusieurs zones de rétrécissement (7, 10, 12) se succédant dans la direction (9) de l'écoulement, et le canal ou les canaux auxiliaire(s) (15) débouche(nt), intérieurement, dans la zone de rétrécissement (10) occupant la deuxième position dans la direction (9) de l'écoulement.

4. Tête de laser munie d'une buse de laser présentant un alésage longitudinal axial qui est destiné à un rayon laser, ainsi qu'à du gaz de découpage, et qui se rétrécit dans la direction de l'écoulement, dans au moins une zone, en formant une surface transversale plane pouvant recevoir un flux, des extrémités intérieures de plusieurs canaux auxiliaires, orientés vers l'extérieur en direction d'une pièce à usiner, débouchant sur la surface transversale de la buse de laser qui peut recevoir un flux, caractérisée par le fait qu'une coulisse annulaire de commande (23), appliquée sur la surface transversale (22), peut accomplir des coulissements commandés dans deux directions perpendiculaires, l'une ou quelques-unes seulement des extrémités intérieures (16) étant en liaison par écoulement avec l'alésage longitudinal (5) dans chaque position prise par coulissement.

5. Tête de laser munie d'une buse de laser, selon au moins l'une des revendications précédentes, caractérisée par le fait que l'embouchure intérieure du canal auxiliaire (15) est affectée, en totalité, à la zone de rétrécissement ou, respectivement, à la zone de rétrécissement sélectionnée (10) représentant notamment une surface conique ; ou bien les embouchures intérieures des canaux auxiliaires (15) sont affectées, en totalité, à la surface transversale (22) de la buse de laser (2) pouvant recevoir un flux ; et chaque canal auxiliaire (15) s'étend rectilignement.

6. Tête de laser munie d'une buse de laser, selon au moins l'une des revendications précédentes, caractérisée par le fait que chaque canal auxiliaire (15) s'étend avec inclinaison par rapport à l'axe (17) de la buse, les axes géométriques (17, 18) de l'alésage longitudinal (5) et de chaque canal auxiliaire (15) se coupant sensiblement à l'extérieur de la buse de laser (2).

7. Tête de laser munie d'une buse de laser, selon la revendication 5, caractérisée par le fait que les axes géométriques (18) de tous les canaux auxiliaires (15) se trouvent sur un tronc de cône imaginaire à l'intérieur de la buse.

8. Tête de laser munie d'une buse de laser, selon au moins l'une des revendications précédentes, caractérisée par le fait qu'un évasement infundibuliforme (14), dans lequel se trouve l'embouchure extérieure (19) de chaque canal auxiliaire (15), est situé dans la continuité de l'embouchure extérieure (6) de l'alésage longitudinal central (5).

9. Tête de laser munie d'une buse de laser, selon au moins l'une des revendications précédentes, caractérisée par le fait que la buse de laser (2) et la tête de laser (1) sont reliées l'une à l'autre par l'intermédiaire de filetages (4).
